# EUROPÄISCHE PATENTSCHRIFT

(11) **EP 3 496 981 B1**
(45) Veröffentlichungstag und Bekanntmachung des Hinweises auf die Patenterteilung: **15.07.2020**
(21) Anmeldenummer: 17754301.4
(22) Anmeldetag: 02.08.2017
(51) Int. Cl.: B60W 10/30, B60W 50/00

(54) **BEREITSTELLUNG EINER FAHRERASSISTENZ**
PROVIDING DRIVER ASSISTANCE
MISE À DISPOSITION D'UN ASSISTANT À LA CONDUITE

(30) Priorität: 12.08.2016 DE 102016215061
(43) Veröffentlichungstag der Anmeldung: 19.06.2019
(73) Patentinhaber: Bayerische Motoren Werke Aktiengesellschaft, 80809 München (DE)
(72) Erfinder: GLAS, Hubert, 81547 München (DE)
(86) Internationale Anmeldenummer: PCT/EP2017/069527
(87) Internationale Veröffentlichungsnummer: WO 2018/029055

(56) Entgegenhaltungen:
- EP-A2- 2 017 774
- DE-A1- 10 126 666
- DE-A1-102009 045 511
- DE-A1-102014 018 913
- US-A1- 2005 274 553

## Beschreibung

Die Erfindung betrifft ein Verfahren zur Bereitstellung einer Fahrerassistenz, welches auf zuverlässige Datenquellen zurückgreift und einen Bedienkomfort eines Fahrzeugs erhöht. Ferner ist die vorliegende Erfindung gerichtet auf ein Fahrerassistenzsystem, welches gemäß dem Verfahren ausgestaltet ist, sowie ein Fahrzeug aufweisend das Fahrerassistenzsystem. Ferner wird ein Computerprogrammprodukt mit Steuerbefehlen, welche das vorgeschlagene Verfahren implementieren bzw. das vorgeschlagene Fahrerassistenzsystem betreiben, vorgeschlagen.

DE 10 2011 075 407 A1 zeigt ein Steuerungssystem zum Steuern eines Betriebszustandes eines Fahrzeugs, welches auf Basis von Geschwindigkeitsdaten, GPS-Daten und/ oder Wetterdaten (aktuell ermittelt sowie Erfahrungswerte) Aktionen ausführt, beispielsweise das Fenster oder Schiebedach schließt, die Klimaanlage einstellt oder den Schwellwert des Einklemmschutzes der Fensterautomatik definiert.

DE 19 619 643 C1 zeigt eine Steuerung von Funktionen, die auf Navigationsdaten basiert. Diese Funktionalität wird durch die DE 10 315 047 A1 dadurch ergänzt, dass der Anwender dem System Funktionsabläufe positionsabhängig beibringen kann, so dass diese zu späteren Zeitpunkten automatisiert ablaufen können.

DE 10 2008 056 907 A1 beschreibt ebenfalls ein lernfähiges System, welches unter Kenntnis der aktuellen Fahrzeugposition beliebige Fahrzeugkomponenten ansteuern kann. Der Benutzer muss hier allerdings selbst definieren an welchen Positionen was geschehen soll.

DE 10 2004 002 584 A1 zeigt ein System, welches abhängig von der Anzahl empfangener Satellitensignale (GPS, Glonass, GNSS sowie zukünftige Systeme) Fenster und Dach/ Schiebedach öffnet und schließt. An diese Aktion können auch weitere Fahrzeugfunktionen gekoppelt werden, wie beispielsweise das Ein-/ Ausschalten der Scheinwerfer. Um die ungewollte automatische Systemaktion zu unterbinden ist ein zusätzlicher Schalter vorgesehen, der dem Fahrer jederzeit die Möglichkeit bietet die automatische Aktion abzubrechen.

DE 10 2009 045 511 A zeigt eine Vorrichtung zum Erlernen einer Funktion einer Bedienhilfe eines Kraftfahrzeugs unter Verwendung von Ortsinformationen, die Vorrichtungen aus EP 2 017 774 A sowie DE 10 2014 018 913 A verwenden hierzu Kamerabilder und die Vorrichtung aus DE 101 26 66 A analysiert hierzu Signale eines Mikrofons.

US 2005/0274553 A beschreibt keine von einem Fahrer zu aktivierenden Fahrzeugfunktionen.

DE 10 2013 201 799 A1 zeigt ein Fahrerassistenzsystem für ein Fahrzeug, umfassend eine Berechnungseinheit, welche zur Aufzeichnung und zum Wiedererkennen einer Fahrstrecke ausgebildet ist, wobei das Fahrerassistenzsystem dazu ausgebildet ist, um das Fahrzeug zum selbstständigen oder halb-selbstständigen Befahren der Trajektorie anzusteuern.

DE 101 07 280 A1 zeigt ein Fahrzeug mit einer Navigationseinrichtung, wobei in definierten Bereichen eines befahrbaren Wegenetzes eine Inbetriebnahme einer Standheizung verhindert wird.

In verschiedenen Verkehrssituationen sind unter Umständen viele gleichzeitige Aktionen des Fahrers erforderlich. Beispielsweise beim Einfahren in einen Tunnel muss das Fahrzeug gesteuert werden, gleichzeitig Fenster und Schiebedach geschlossen werden, die Klimaanlage in Umluftbetrieb gestellt werden und die Scheinwerfer eingeschaltet werden.

Bekannte Verfahren adressieren die Problematik der automatischen, situationsabhängigen Steuerung von Fahrzeugkomponenten, insbesondere der Fahrzeugaußenhaut. Hierfür sind grundlegende Elemente notwendig, wie eine Funktionslogik, die die Stellparameter festlegt, und eine Steuerungseinheit die auf Grundlage dieser Daten eine Aktion ausführt.

Nachteilig bei Systemen gemäß dem Stand der Technik ist es, dass diese auf Daten aus Systemen die zur technisch aufwendigen Sonderausstattung von Fahrzeugen gehören basieren, wie zum Beispiel Navigationsdaten, Wetterdaten oder Daten aus dem Internet. Somit sind diese nur in Fahrzeugen verwendbar, die über diese technisch aufwendige Sonderausstattung verfügen. Ferner erfordern Systeme gemäß dem Stand der Technik eine Verbindung des Fahrzeugs mit Satelliten, dem Internet oder irgendeiner sonstigen externen Informationsquelle. Somit können sie im Fall einer Signalunterbrechung nicht exakt arbeiten, beispielsweise in langen Tunneln oder Tiefgaragen. Bisherige lernfähige oder vorprogrammierbare Systeme erfordern typischerweise eine Interaktion des Benutzers, entweder vor Beginn der Fahrt oder währenddessen, beispielsweise um den Lernmodus zu aktivieren.

Es ist daher eine Aufgabe der vorliegenden Erfindung ein Verfahren zur Bereitstellung einer Fahrerassistenz vorzuschlagen, welches auf zuverlässige Datenquellen zurückgreift und einen Bedienkomfort eines Fahrzeugs erhöht. Ferner ist es eine Aufgabe ein Fahrerassistenzsystem bereitzustellen, welches gemäß dem Verfahren ausgestaltet ist, sowie ein Fahrzeug aufweisend das Fahrerassistenzsystem. Es ist ferner eine Aufgabe ein Computerprogrammprodukt mit Steuerbefehlen, welche das vorgeschlagene Verfahren implementieren bzw. das vorgeschlagene Fahrerassistenzsystem betreiben, vorzuschlagen.

Die Aufgabe wird gelöst durch ein Verfahren mit den Merkmalen gemäß Patentanspruch 1. Weitere vorteilhafte Ausgestaltungen sind in den Unteransprüchen angegeben.

Demgemäß wird ein Verfahren zur Bereitstellung einer Fahrerassistenz vorgeschlagen, welches folgende Schritte umfasst, nämlich ein Aufzeichnen mindestens eines Bewegungsmusters eines Fahrzeugs mitsamt aktivierter Fahrzeugfunktionen und ein Bereitstellen der jeweiligen Fahrzeugfunktion in Abhängigkeit eines Erkennens zumindest eines Teils eines bereits aufgezeichneten Bewegungsmusters während einer Fahrt, wobei das Bewegungsmuster mittels Odometriesensoren erstellt wird.

Die Bereitstellung der Fahrerassistenz erfolgt derart, dass entweder direkt die Fahrzeugfunktionen durchgeführt werden oder aber dem Benutzer vorgeschlagen werden und dieser diese annehmen kann. Eine Fahrerassistenz steuert dabei mindestens eine Funktionalität des Fahrzeugs. Hierbei ist nicht wesentlich, dass das Fahrerassistenzsystem tatsächlich das Fahren an sich unterstützt, sondern vielmehr können dem Benutzer, also dem Fahrer, jegliche Funktionen angeboten werden, welche direkt oder indirekt über das Fahrerassistenzsystem ansteuerbar sind.

Das Aufzeichnen mindestens eines Bewegungsmusters eines Fahrzeugs mitsamt aktivierter Fahrzeugfunktionen entspricht einem Abspeichern von Fahrparametern mitsamt derjenigen Funktionen, die der Fahrer veranlasst hat. Das Veranlassen erfolgt typischerweise manuell, wobei geschlossen wird, dass der Fahrer in gleicher Situation wieder diese Funktion veranlassen würde. Somit werden erfindungsgemäß Fahrparameter in vorbereitenden Verfahrensschritten aufgezeichnet und bei ausreichender Übereinstimmung von während einer Fahrt gemessenen Fahrparametern wird erkannt, dass die gleiche Strecke bereits befahren wurde oder die gleiche Situation bereits aufgetreten ist. Somit kann dem Fahrer angeboten werden, dass mit seiner Zustimmung oder automatisiert die gleichen Funktionen durchgeführt werden.

Das Bereitstellen der jeweiligen Fahrzeugfunktion oder einer Mehrzahl von Fahrzeugfunktionen erfolgt in Abhängigkeit eines Wiedererkennens zumindest eines Teils eines bereits aufgezeichneten Bewegungsmusters, also entweder einer Teilstrecke oder einer Situation, welche bereits durchfahren wurde. Somit kann ein Verhalten des Fahrers einer Strecke oder eine Situation zugeordnet werden und dieses Verhalten erneut durchgeführt werden.

Da das Bewegungsmuster mittels Odometriesensoren erstellt wird, wird das Fahrzeugverhalten über einen vorgegebenen Zeitraum beobachtet und die Fahrzeugdaten werden abgespeichert. Somit gelten erfindungsgemäß Odometriesensoren als alle Sensoren, welche ein Fahrverhalten und/ oder Fahrzeugparameter abgreifen. Hierzu kennt der Fachmann mehrere Sensoren, welche beispielsweise Parameter weiterer Bauteile messen. Diese Bauteile sind bevorzugt der Motor, das Lenkrad, eine Bremse, Reifen oder Reifenteile, Raddrehzahlsensorik, Beschleunigungs- und Drehratensensorik und generell alle Fahrzeugkomponenten, welche Rückschlüsse auf eine zurückgelegte Fahrzeugbewegung zulassen.

Ein Bewegungsmuster eines Fahrzeugs umfasst Strecken, Teilstrecken, Kurven, Geschwindigkeiten, ein Bremsverhalten, ein Beschleunigungsverhalten, ein Lenkverhalten, eine beliebige Sequenz aus bereits aufbereiteten Odometriedaten und dergleichen mehr. Beispielsweise ist ein Bewegungsmuster eine Abfolge einer Strecke einer ersten Länge mitsamt einer leichten Kurve. Darauf folgt eine zweite, gerade Strecke. Danach erfolgt eine scharfe Kurve mit entsprechendem Bremsverhalten. Werden diese Teilbewegungsmuster oder das Bewegungsmuster insgesamt wiedererkannt, so kann eine oder mehrere Fahrzeugfunktionen angeboten werden.

Generell ist die vorliegende Erfindung auf Fahrzeuge mit beliebigen Antriebskonzepten, so zum Beispiel Elektrofahrzeuge, Fahrzeuge mit Verbrennungsmotor oder Hybridfahrzeuge gerichtet. Insofern werden generell Kraftfahrzeuge mitsamt Fahrerassistenzsystemen erfindungsgemäß weiterentwickelt. Der Begriff Fahrzeugaußenhaut ist als ein Oberbegriff für die äußeren Bauteile des Fahrzeuges zu verstehen. Die Bauteile des Fahrzeuges bieten hierbei eine Fahrzeugfunktion an.

Im Folgenden wird gemäß einem Aspekt der vorliegenden Erfindung eine neue Funktionslogik vorgestellt, die entweder Fahrzeugfunktionen selbstständig ausführt oder dem Fahrer Optionen für Fahrzeugfunktionen vorschlägt, die nach einer Bestätigung durch den Fahrer ausgeführt werden.

Erfindungsgemäß basiert die Funktionslogik auf odometrischen Daten, beispielswiese der gefahrenen Strecke, der Position und Orientierung des Fahrzeuges in einem globalen Koordinatensystem, einer Krümmung, ein Schwimmwinkel, dem Lenkradwinkel etc. Hieraus werden Bewegungsmuster des Fahrzeuges erlernt, indem wiederkehrende Abläufe, also eine gleiche Abfolge von odometrischen Daten, gespeichert werden. Der Lernprozess erfolgt gemäß einem Aspekt der vorliegenden Erfindung vollkommen automatisch aus Sicht des Fahrers im Hintergrund, ohne Interaktion des Fahrers und unterscheidet sich somit von bekannten Verfahren, wie sie beispielsweise in DE 10 315 047 A1 gezeigt werden, bei denen der Fahrer den Lernprozess selbst initiieren muss. Dieser Nachteil wird erfindungsgemäß überwunden.

Im Kontext der vorliegenden Erfindung bezeichnet Odometrie eine Methode der Schätzung von Position und Orientierung eines Fahrzeugs anhand der Daten des jeweiligen Vortriebssystems, der Lenkung und Inertialsensorik. Ein Beispiel hierfür ist die Anzahl der Radumdrehungen unter Berücksichtigung deren Abmessung. Odometrie bezeichnet vorliegend mindestens eine Funktionalität, die zu bestimmten Zeitpunkten der Fahrt die Position, Ausrichtung und den Fahrzustand eines Fahrzeugs erkennt. Hierzu überwacht die Odometriesensorik das Fahrwerk mitsamt der jeweiligen Raddrehung, der Richtung, Beschleunigungen, Drehraten und die Lenkung mitsamt Radlenkwinkel und Lenkradwinkel. Somit kann eine Wegstrecke ohne Empfang wie Tunnelstrecken überbrückt werden und Daten weiterer Sensoren können verifiziert werden.

Der Lernprozess kann erfindungsgemäß derart ablaufen, dass die Odometrie über mehrere Sekunden getrackt, also überwacht, wird und im Fall einer Fenster- oder Dachfensterbedienung gespeichert wird. Je häufiger sich das entsprechende Ereignis wiederholt, desto präziser kann die Funktionslogik künftige Aktionen vorhersehen. Auf Basis dessen sollen dann entweder automatisch gewisse Fahrzeugfunktionen ablaufen, beispielsweise das Fenster oder Dach betätigt werden, oder diese Handlungen dem Fahrer zumindest vorgeschlagen werden.

Ein mögliches Anwendungsbeispiel ist das Ausparken aus einer Tiefgarage mit festen Stellplätzen. Die Fahrbewegung wird nach dem Starten des Motors stets gleich ablaufen, so dass die vorgeschlagene Funktionslogik das Bewegungsmuster erkennen kann und im richtigen Moment, zum Beispiel kurz vor dem Erreichen des Tors oder der Schranke, eine Aktion ausführen kann, die an dieser Stelle immer erforderlich ist, beispielsweise das Fenster an der Fahrerseite öffnen, damit der Fahrer mit dem Parkticket die Schranke öffnen kann. Das anschließende Fortsetzen der Fahrt kann ebenfalls erkannt werden, so dass das Fenster automatisch geschlossen wird. In diesem Moment muss der Fahrer das Lenkrad halten und einen Gang einlegen. Er hat also keine Hand mehr frei um den Knopf zum Öffnen des Fensters selbst zu betätigen.

Handelt es sich um das Einparken, beispielsweise am Ende des Arbeitsweges, so kann auch dies als Bewegungsmuster erkannt werden, da der Arbeitsweg normalerweise täglich gleich ist.

Eine weitere Ausführungsmöglichkeit gemäß einem Aspekt der vorliegenden Erfindung kann so ausgelegt werden, dass dem Fahrer anhand des erkannten Bewegungsmusters Vorschläge für Funktionen unterbreitet werden. Diese Vorschläge können dann auf verschiedene Weisen bestätigt werden, so dass das Fahrzeug die Aktion/-en ausführt. Denkbare Möglichkeiten zur Bestätigung sind beispielsweise eine Integration in einem Fahrerassistenzsystem, Gestensteuerung oder auch Antippen eines Touch-Displays.

Im Gegensatz zum Stand der Technik ist die odometriebasierte Positionserkennung nicht abhängig von Sonderausstattung und kann auch unabhängig von Zeit-, Wetterund Satellitendaten funktionieren. Zur Verbesserung der Genauigkeit kann sie allerdings an weitere Daten gekoppelt werden, wenn das entsprechende Fahrzeug über geeignete Systeme verfügt. Gemäß einem Aspekt der vorliegenden Erfindung kann diese Funktionslogik ausschließlich an nicht-sicherheitsrelevante Funktionen koppelt werden, so dass sie lediglich zu einer Verbesserung des Bedienkomforts führt.

Somit ist es erfindungsgemäß besonders vorteilhaft, dass eine Erhöhung des Bedienkomforts durch Reduktion der notwendigen Handlungen des Fahrers erfolgt, wobei mehrere Handlungen gleichzeitig durchführbar sind und es wird mit lediglich einem Knopfdruck, Interaktion oder anderer Bestätigung eine Mehrzahl von Aktionen initiiert. Somit lässt sich auch ein Verzicht auf Nutzerinteraktion im automatischen Modus realisieren.

Gemäß einem Aspekt der vorliegenden Erfindung wird eine selbstlernende Funktionslogik bereitgestellt, die losgelöst von Satellitendaten funktioniert, und somit auch für Fahrzeuge ohne Navigationssystem geeignet ist und keine Aktion des Benutzers zum Erlernen von Bewegungsschemata benötigt. Der Zeitpunkt der Aktion bzw. des Vorschlags zur Aktion wird erfindungsgemäß vollkommen automatisch erlernt und optimiert. Vorhersagen werden mit größer werdendem Datensatz präziser. Die Funktionslogik funktioniert auch dann, wenn keine Verbindung zu einer externen Signalquelle besteht.

Gemäß einem Aspekt der vorliegenden Erfindung umfasst eine Fahrzeugfunktion ein Bewegen mindestens eines Fahrzeugfensters, ein Ansteuern einer Klimaanlage, ein Ansteuern einer Lüftung, ein Ansteuern mindestens eines Fahrzeuglichts und/ oder ein Ansteuern einer Komfortfunktion. Dies hat den Vorteil, dass jegliche Fahrzeugfunktion, beispielsweise ein Fensterheber oder ein Dachfenster, betätigt werden kann. Insbesondere können auch mehrere der genannten Komponenten gleichzeitig angesprochen werden. Hierbei sind alle Komponenten denkbar, welche mittels eines Fahrerassistenzsystems direkt oder indirekt ansprechbar sind.

Gemäß einem weiteren Aspekt der vorliegenden Erfindung umfasst das Bereitstellen der jeweiligen Fahrzeugfunktion ein selbsttätiges Auslösen der Fahrzeugfunktion oder ein Auslösen der Fahrzeugfunktion in Abhängigkeit einer Benutzereingabe. Dies hat den Vorteil, dass die Fahrzeugfunktionen automatisch durchgeführt werden oder aber der Benutzer aufgefordert wird, die Ausführung zu autorisieren. Somit kann der Fahrer per Stimmeingabe, Tastendruck oder Berühren eines berührungsempfindlichen Displays die angebotenen Funktionen ausführen lassen. Hierzu ist jegliche Mensch-Maschine-Schnittstelle denkbar, wie zum Beispiel Gestensteuerung.

Gemäß einem weiteren Aspekt der vorliegenden Erfindung werden mittels mindestens eines Odometriesensors eine Länge einer zurückgelegten Strecke, Lenkradwinkel, Raddrehungen, eine Fahrtrichtung, Drehraten, Beschleunigungen und/ oder Fahrzeugparameter erfasst. Dies hat den Vorteil, dass Sensoren verwendet werden können, welche stets ohne Unterbrechung in einem Fahrzeug vorgehalten werden können. So ist keine Datenverbindung notwendig, welche gestört oder verfälscht sein kann. Ferner ist es vorteilhaft die Odometriesensoren redundant vorzuhalten, derart, dass bei Ausfall eines Sensors mindestens ein weiterer diesen ersetzt. Ferner können so Sensordaten überprüft werden, da eine Mehrzahl von Sensoren einen Wert jeweils gesondert bereitstellen kann und somit Referenzdaten des gleichen, zu erwartenden Wertes vorliegen.

Gemäß einem weiteren Aspekt der vorliegenden Erfindung umfasst das Erkennen zumindest eines Teils eines bereits aufgezeichneten Bewegungsmusters ein Vergleichen von erfassten mit abgespeicherten Bewegungsmustern, wobei beide im Wesentlichen übereinstimmen. Dies hat den Vorteil, dass das Bewegungsmuster nicht vollständig korrekt wiedererkannt werden muss, sondern vielmehr lässt sich ein Schwellwert bereitstellen, der einen geforderten Grad der Übereinstimmung fordert. Beispielsweise wird eine Strecke mit gleichen Längen und Kurvenneigungen wiedererkannt, die zu einem hohen Prozentsatz mit einer abgespeicherten Strecke übereinstimmt. Liegt der hohe Prozentsatz der Übereinstimmung einer gerade gemessenen Strecke und einer abgespeicherten Strecke vor, so können die gleichen Funktionen angeboten werden oder durchgeführt werden, wie sie auch beim ersten Durchfahren der Strecke aktiviert wurden.

Gemäß einem weiteren Aspekt der vorliegenden Erfindung werden die Daten der Odometriesensoren von Daten weiterer Sensoren ergänzt. Dies hat den Vorteil, dass Daten verifiziert oder aber auch verfeinert werden können. So können auch die Odometriedaten überprüft und erweitert werden. Insbesondere können somit Sensoren kalibriert werden.

Gemäß einem weiteren Aspekt der vorliegenden Erfindung umfasst das Aufzeichnen mindestens eines Bewegungsmusters eines Fahrzeugs mitsamt aktivierter Fahrzeugfunktionen ein Aufzeichnen der Zeitpunkte, welche angeben, wann die jeweilige Fahrzeugfunktion aktiviert wurde, und das Bereitstellen der jeweiligen Fahrzeugfunktion berücksichtigt jeweils diesen Zeitpunkt. Dies hat den Vorteil, dass falls eine Situation oder eine Strecke wiedererkannt wird, in genau dem richtigen Zeitpunkt die jeweilige Funktion angeboten oder durchgeführt werden kann. Somit ist also mit jedem Bewegungsmuster eine zeitliche Sequenz von Aktivierungszeitpunkten verknüpft, welche einzelnen Punkten des Bewegungsmusters zugeordnet ist.

Die Aufgabe wird auch gelöst durch ein Fahrerassistenzsystem zur Bereitstellung einer Fahrerassistenz, aufweisend eine Sensoreinheit eingerichtet zum Aufzeichnen mindestens eines Bewegungsmusters eines Fahrzeugs mitsamt aktivierter Fahrzeugfunktionen durch Abspeichern von Fahrparametern mitsamt derjenigen Funktionen, die der Fahrer veranlasst hat und einer Ausgabeeinheit eingerichtet zum Bereitstellen der jeweiligen Fahrzeugfunktion in Abhängigkeit eines Erkennens zumindest eines Teils eines bereits aufgezeichneten Bewegungsmusters während einer Fahrt, wobei das Bewegungsmuster mittels Odometriesensoren erstellt wird. Hierbei werden die vorgeschlagenen Verfahrensschritte strukturell nachgebildet.

Die Aufgabe wird auch gelöst durch ein Fahrzeug aufweisend das vorgeschlagene Fahrerassistenzsystem.

Die Aufgabe wird auch gelöst durch ein Computerprogrammprodukt mit Steuerbefehlen, welche das vorgeschlagene Verfahren implementieren bzw. das vorgeschlagene Fahrerassistenzsystem betreiben.

Erfindungsgemäß ist es besonders vorteilhaft, dass das Verfahren zum Betreiben des vorgeschlagenen Fahrerassistenzsystems mitsamt dessen Einheiten verwendet werden kann. Ferner eignen sich die vorgeschlagenen Vorrichtungen und Einrichtungen, also das Fahrerassistenzsystem, zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zur Umsetzung der Funktion der strukturellen Merkmale bereit.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren.

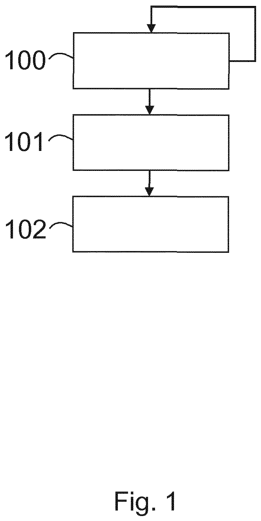

Die Figur 1 zeigt ein schematisches Ablaufdiagramm eines Verfahrens zur Bereitstellung einer Fahrerassistenz gemäß einem Aspekt der vorliegenden Erfindung.

Figur 1 zeigt ein schematisches Ablaufdiagramm eines Verfahrens zur Bereitstellung einer Fahrerassistenz, aufweisend die Schritte eines Aufzeichnens 100 mindestens eines Bewegungsmusters eines Fahrzeugs mitsamt aktivierter Fahrzeugfunktionen und eines Bereitstellens 102 der jeweiligen Fahrzeugfunktion in Abhängigkeit eines Erkennens 101 zumindest eines Teils eines bereits aufgezeichneten Bewegungsmusters während einer Fahrt, wobei das Bewegungsmuster mittels Odometriesensoren erstellt 100 wird.

Der Fachmann erkennt hierbei, dass einzelne Verfahrensschritte iterativ durchgeführt werden können. Beispielsweise kann das Aufzeichnen 100 mindestens eines Bewegungsmusters beliebig oft wiederholt werden, damit ausreichend Referenzdaten verfügbar sind. Auch kann dieser Verfahrensschritt herstellerseitig durchgeführt werden derart, dass die Bewegungsmuster in einem Datenspeicher zur Verfügung stehen und mit einem Fahrzeug beziehungsweise dem Fahrerassistenzsystem ausgeliefert werden. Somit können die Bewegungsmuster auf einem Datenspeicher hinterlegt werden.

Ferner können die einzelnen Verfahrensschritte als strukturelle Merkmale des Fahrerassistenzsystems implementiert werden, weshalb Figur 1 in analoger Weise auch ein Blockschaltbild des Fahrerassistenzsystems mitsamt entsprechender Einheiten zeigt.

Vorliegend nicht gezeigt ist ein Datenspeicher oder ein computerlesbares Medium mit einem Computerprogrammprodukt aufweisend Steuerbefehle, welche das vorgeschlagene Verfahren implementieren bzw. das vorgeschlagene Fahrerassistenzsystem betreiben.

## Patentansprüche

1. Verfahren zur Bereitstellung einer Fahrerassistenz, aufweisend die Schritte:
- Aufzeichnen (100) mindestens eines Bewegungsmusters eines Fahrzeugs mitsamt aktivierter Fahrzeugfunktionen durch Abspeichern von Fahrparametern mitsamt derjenigen Funktionen, die der Fahrer veranlasst hat; und
- Bereitstellen (102) der jeweiligen Fahrzeugfunktion in Abhängigkeit eines Erkennens (101) zumindest eines Teils eines bereits aufgezeichneten Bewegungsmusters während einer Fahrt,
**gekennzeichnet durch** den Schritt:
Erstellen (100) des Bewegungsmusters mittels Odometriesensoren.

2. Verfahren nach Anspruch 1, **dadurch gekennzeichnet, dass** eine Fahrzeugfunktion ein Bewegen mindestens eines Fahrzeugfensters, ein Ansteuern einer Klimaanlage, ein Ansteuern einer Lüftung, ein Ansteuern mindestens eines Fahrzeuglichts und/ oder ein Ansteuern einer Komfortfunktion umfasst.

3. Verfahren nach Anspruch 1 oder 2, **dadurch gekennzeichnet, dass** das Bereitstellen (102) der jeweiligen Fahrzeugfunktion ein selbsttätiges Auslösen der Fahrzeugfunktion oder ein Auslösen der Fahrzeugfunktion in Abhängigkeit einer Benutzereingabe umfasst.

4. Verfahren nach einem der vorhergehenden Ansprüche, **dadurch gekennzeichnet, dass** mittels mindestens eines Odometriesensors eine Länge einer zurückgelegten Strecke, Lenkradwinkel, Raddrehungen, eine Fahrtrichtung, Beschleunigungen, Drehraten und/ oder Fahrzeugparameter erfasst (100) werden.

5. Verfahren nach einem der vorhergehenden Ansprüche, **dadurch gekennzeichnet, dass** das Erkennen (101) zumindest eines Teils eines bereits aufgezeichneten Bewegungsmusters ein Vergleichen von erfassten mit abgespeicherten Bewegungsmustern umfasst, wobei beide im Wesentlichen übereinstimmen.

6. Verfahren nach einem der vorhergehenden Ansprüche, **dadurch gekennzeichnet, dass** die Daten der Odometriesensoren von Daten weiterer Sensoren ergänzt werden.

7. Verfahren nach einem der vorhergehenden Ansprüche, **dadurch gekennzeichnet, dass** das Aufzeichnen (100) mindestens eines Bewegungsmusters eines Fahrzeugs mitsamt aktivierter Fahrzeugfunktionen ein Aufzeichnen der Zeitpunkte umfasst, welche angeben, wann die jeweilige Fahrzeugfunktion aktiviert wurde und das Bereitstellen der jeweiligen Fahrzeugfunktion jeweils diesen Zeitpunkt berücksichtigt.

8. Fahrerassistenzsystem zur Bereitstellung einer Fahrerassistenz, aufweisend:
- eine Sensoreinheit eingerichtet zum Aufzeichnen mindestens eines Bewegungsmusters eines Fahrzeugs mitsamt aktivierter Fahrzeugfunktionen durch Abspeichern von Fahrparametern mitsamt derjenigen Funktionen, die der Fahrer veranlasst hat;
- eine Ausgabeeinheit eingerichtet zum Bereitstellen der jeweiligen Fahrzeugfunktion in Abhängigkeit eines Erkennens zumindest eines Teils eines bereits aufgezeichneten Bewegungsmusters während einer Fahrt,
**dadurch gekennzeichnet, dass** das Fahrerassistenzsystem eingerichtet ist das Bewegungsmuster mit Hilfe von Odometriesensoren zu erstellen.

9. Fahrzeug aufweisend ein Fahrerassistenzsystem gemäß Anspruch 8.

10. Computerprogrammprodukt mit Steuerbefehlen, das so angepasst ist, dass es ein Verfahren nach einem der Ansprüche 1 bis 7 ausführt.

## Claims

1. Method for providing driver assistance, having the steps of:
- recording (100) at least one movement pattern of a vehicle together with activated vehicle functions by storing driving parameters together with those functions which have been initiated by the driver; and
- providing (102) the respective vehicle function on the basis of detection (101) of at least one part of a movement pattern which has already been recorded during a journey,
**characterized by** the step of:
creating (100) the movement pattern by means of odometry sensors.

2. Method according to Claim 1, **characterized in that** a vehicle function comprises moving at least one vehicle window, controlling an air-conditioning system, controlling a ventilation system, controlling at least one vehicle light and/or controlling a comfort function.

3. Method according to Claim 1 or 2, **characterized in that** the provision (102) of the respective vehicle function comprises automatically triggering the vehicle function or triggering the vehicle function on the basis of a user input.

4. Method according to one of the preceding claims, **characterized in that** a length of a route covered, steering wheel angles, wheel rotations, a direction of travel, accelerations, rotation rates and/or vehicle parameters are captured (100) using at least one odometry sensor.

5. Method according to one of the preceding claims, **characterized in that** the detection (101) of at least one part of a movement pattern which has already been recorded comprises comparing captured movement patterns with stored movement patterns, wherein both substantially match.

6. Method according to one of the preceding claims, **characterized in that** the data from the odometry sensors are supplemented with data from further sensors.

7. Method according to one of the preceding claims, **characterized in that** the recording (100) of at least one movement pattern of a vehicle together with activated vehicle functions comprises recording the times which indicate when the respective vehicle function was activated, and the provision of the respective vehicle function respectively takes this time into account.

8. Driver assistance system for providing driver assistance, having:
- a sensor unit set up to record at least one movement pattern of a vehicle together with activated vehicle functions by storing driving parameters together with those functions which have been initiated by the driver;
- an output unit set up to provide the respective vehicle function on the basis of detection of at least one part of a movement pattern which has already been recorded during a journey,
**characterized in that** the driver assistance system is set up to create the movement pattern with the aid of odometry sensors.

9. Vehicle having a driver assistance system according to Claim 8.

10. Computer program product having control instructions which is adapted to carry out a method according to one of Claims 1 to 7.

## Revendications

1. Procédé de mise à disposition d'une assistance à la conduite, comprenant les étapes consistant à :
- enregistrer (100) au moins un profil de déplacement d'un véhicule conjointement avec des fonctions de véhicule activées en stockant des paramètres de conduite conjointement avec les fonctions que le conducteur a déclenchées ; et
- mettre à disposition (102) la fonction de véhicule respective en fonction d'une reconnaissance (101) d'au moins une partie d'un profil de déplacement déjà enregistré pendant un trajet,
**caractérisé par** l'étape consistant à :
créer (100) le profil de déplacement au moyen de capteurs odométriques.

2. Procédé selon la revendication 1, **caractérisé en ce qu'**une fonction de véhicule comprend le déplacement d'au moins une fenêtre de véhicule, la commande d'un système de climatisation, la commande d'un système de ventilation, la commande d'au moins un éclairage de véhicule et/ou la commande d'une fonction de confort.

3. Procédé selon la revendication 1 ou 2, **caractérisé en ce que** la mise à disposition (102) de la fonction de véhicule respective comprend un déclenchement automatique de la fonction de véhicule ou un déclenchement de la fonction de véhicule en fonction d'une entrée de l'utilisateur.

4. Procédé selon l'une des revendications précédentes, **caractérisé en ce qu'**une longueur d'un trajet parcouru, un angle de volant, des rotations de roues, une direction de déplacement, des accélérations, des vitesses de rotation et/ou des paramètres de véhicule sont détectés (100) au moyen d'au moins un capteur odométrique.

5. Procédé selon l'une des revendications précédentes, **caractérisé en ce que** la reconnaissance (101) d'au moins une partie d'un profil de déplacement déjà enregistré comprend une comparaison de profils de déplacement détectés à des profils de déplacement stockés, dans lequel ceux-ci sont sensiblement identiques.

6. Procédé selon l'une des revendications précédentes, **caractérisé en ce que** les données des capteurs odométriques sont complétées par des données d'autres capteurs.

7. Procédé selon l'une des revendications précédentes, **caractérisé en ce que** l'enregistrement (100) d'au moins un profil de déplacement d'un véhicule conjointement avec des fonctions de véhicule activées comprend un enregistrement des instants qui indiquent quand la fonction de véhicule respective a été activée, et **en ce que** la mise à disposition de la fonction de véhicule respective tient compte dudit instant respectif.

8. Système d'assistance à la conduite pour la mise à disposition d'une assistance à la conduite, comportant :
- une unité de capteur conçue pour enregistrer au moins un profil de déplacement d'un véhicule conjointement avec des fonctions de véhicule activées en stockant des paramètres de conduite conjointement avec les fonctions que le conducteur a déclenchées ;
- une unité de sortie conçue pour la mise à disposition de la fonction de véhicule respective en fonction de la reconnaissance d'au moins une partie d'un profil de déplacement déjà enregistré pendant un trajet, **caractérisé en ce que** le système d'assistance à la conduite est conçu pour créer le profil de déplacement à l'aide de capteurs odométriques.

9. Véhicule comportant un système d'assistance à la conduite selon la demande 8.

10. Produit de programme informatique comprenant des instructions de commande qui sont adaptées pour mettre en œuvre un procédé selon l'une des revendications 1 à 7.
